# EUROPEAN PATENT APPLICATION

(11) **EP 1 091 548 A2**
(43) Date of publication of application: **11.04.2001**
(21) Application number: 00650133.2
(22) Date of filing: 15.09.2000
(51) Int. Cl.: H04M 3/428

(54) **Multimedia music on hold**

(30) Priority: 08.10.1999 US 414550
(71) Applicant: Nortel Networks Limited, Montreal, Quebec H2Y 3Y4 (CA)
(72) Inventor: Cruickshank, Brian, Oakville, Ontario L6L 4N8 (CA)
(74) Representative: Coyle, Philip Aidan

(57) **Abstract**

A method is disclosed that permits a call handling system to supply a caller with multimedia information supplementary to information or entertainment received over a voice link. While waiting in a hold queue, a caller may receive, at a computer terminal, a display comprising a list of frequently asked questions or a choice of radio stations that may be heard over the voice link. Information regarding the caller's place in the hold queue and/or an estimate of waiting time may also be available. Further, data may be collected from a caller and, upon connection of the call with a call agent, presented to the call agent.

## Description

### FIELD OF THE INVENTION

The present invention relates to call handling methods and systems that provide, in one embodiment, multimedia information to a caller on hold.

### BACKGROUND OF THE INVENTION

As products and services become more complex, consumers are placing increasing importance on service after a sale. For years, consumers could call a toll-free telephone number for information beyond that included with a product. Recently, world wide web home pages available on the Internet have become useful as a supplement to a toll-free telephone number. However, a web site may not be up to date, the address of the web site may not be easy to find or a consumer may wish to speak to a live person. For these reasons and others, toll-free telephone lines continue to be in wide use.

At the receiving end of a toll-free telephone number is often a number of telephones arranged as a 'call centre'. A call centre typically includes a central call handling system that can direct incoming calls to telephones that are not in use. Present at the telephones are agents for answering questions from the public. When no agents are available, an incoming call is placed in a hold queue. Subsequent calls are also placed in the hold queue and the call handling system generally connects callers with available agents in the order that the calls arrived at the system.

Currently, some call handling systems provide 'music on hold' to assure a caller in a hold queue that the call is still connected and to provide entertainment while the caller is waiting. The music heard while on hold can be, for instance, an audio feed from a radio station. Keeping the caller entertained while on hold is often important for call centres, where it may encourage the caller to remain connected instead of hanging up. Existing music on hold implementations may provide some information to the caller by interjecting voice indications with the music (e.g., the position in the queue, estimated waiting time).

In a system disclosed in U.S. Patent 4,577,067 issued March 18, 1986 to Levy et al., a caller listening to music on hold may, through the use of tones generated by a telephone keypad, change the volume of the music or change the 'channel' from jazz to rock.

A call handling system may also include an interactive voice response (IVR) service for interactively supplying information sought to the caller. A caller may navigate through voice menus to obtain specific information, but the caller may be required to exit the queue to use the voice menu, thus losing place in the queue and increasing the delay in reaching an agent.

U.S. Patent 5,444,744 issued August 22, 1995 to Friedes discloses a system that, when a caller is placed in a hold queue, may initiate an information gathering session with which the caller may interact. The session would issue questions to the caller via a voice link and the caller may answer by using the signalling capability of the telephone keypad. The result of the session may be used to query a customer database for further caller related information. When the caller is subsequently connected to an agent, information collected about the caller may be displayed for the use of the agent. Although the system may learn about the caller, the caller may not receive information until connected to an agent.

### SUMMARY OF THE INVENTION

The method of the subject invention permits a call handling system to supply a caller with multimedia information supplementary to information or entertainment received over a first communication link. While waiting on hold a caller may receive a list of frequently asked questions or a choice of radio stations that may be heard over the first communication link.

In accordance with an aspect of the present invention there is provided, after an incoming call has been established on a first communication link and assigned to a hold queue, a method for sending information to a caller of the incoming call including selecting an additional communication link for sending the information to the caller and sending the information to the caller using this additional communication link. In another aspect of the invention a call handling system is provided for carrying out this method. In a further aspect of the invention a software medium permits a general purpose computer to carry out this method.

In accordance with an aspect of the present invention there is provided, after an incoming call has been established on a first communication link, a method for sending information to a caller of the incoming call including assigning the incoming call to a hold queue, selecting an additional communication link for sending information to the caller and sending the information to the caller using the additional communication link.

In accordance with an aspect of the present invention there is provided a method for presenting information to a caller including, where the caller is connected to a call handling system over a first communication link, receiving information from the call handling system over an additional communication link, the additional communication link comprising a data communication link. Further, the method includes launching, responsive to receiving the information, a user interface and presenting the information to the caller through the user interface. In another aspect of the invention, an information presenting system is provided for carrying out this method. In further aspect of the invention a software medium permits a general purpose computer to carry out this method.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate an example embodiment of this invention:
FIG. **1** schematically illustrates a telecommunication system;
FIG. **2** illustrates, in a flow diagram, a procedure for sending supplementary information in an embodiment of the invention;
FIG. **3** illustrates, in a flow diagram, a procedure for receiving supplementary information in an embodiment of the invention.

### DETAILED DESCRIPTION OF THE PREFERRED EMBODIMENTS

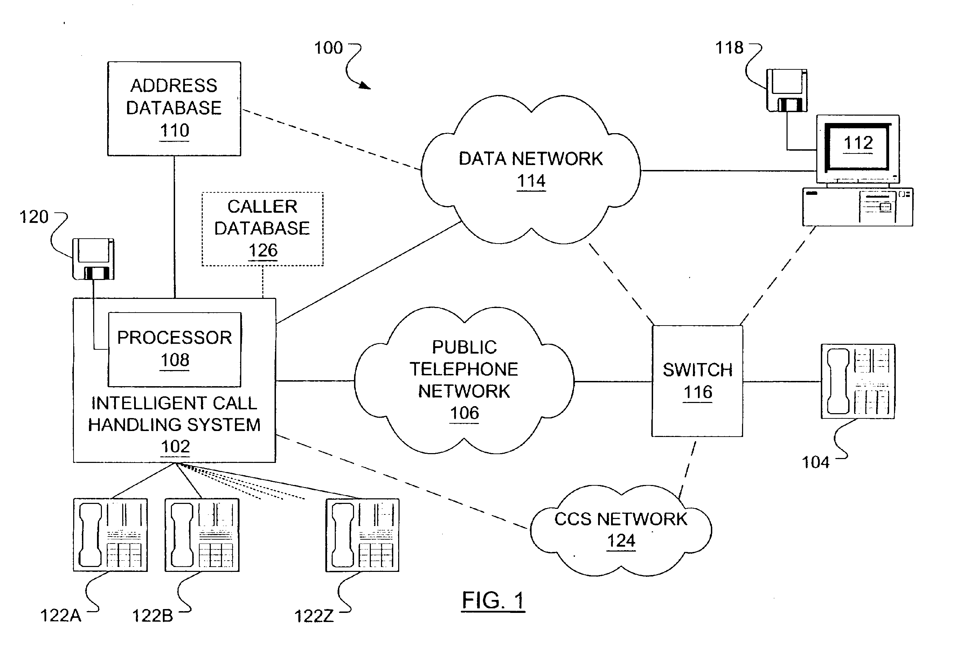

As illustrated in FIG. **1**, a telecommunication system **100** comprises a telephone station apparatus **104** connected to a public switched telephone network (PSTN) **106** through a switch **116**. A plurality of second telephone station apparatus **122A**, **122B**,..., **122Z** are connected to PSTN **106** through an intelligent call handling system **102**. Associated with telephone station apparatus **104** is a terminal **112** connected to a data network **114**. Also connected to data network **114** is intelligent call handling system **102**. Data network **114** may be, for instance, the Internet. An address database **110** is available to intelligent call handling system **102** either via direct connection or via data network **114**. Intelligent call handling system **102** includes a processor **108** loaded with call handling software for executing the method of this invention from software medium **120** whereas terminal **112** is loaded with information handling software from software medium **118**. Each of software media **118** and **120** may be a disk, a tape, a chip or a random access memory containing a file downloaded from a remote source. A connection may exist between intelligent call handling system **102** and switch **116** through common channel signalling (CCS) network **124**. Connected to intelligent call handling system **102** may be a caller database **126** for storing any information regarding a caller collected while the caller is in a hold queue.

In operation, a caller at telephone station apparatus **104** places a call over a first communication link through switch **116** and PSTN **106** to a location employing intelligent call handling system **102**. If an agent at one of telephone station apparatus **122A**, **122B**,..., **122Z** is available, the call may continue as is known. However, upon determining that no agent is available for answering the incoming call, intelligent call handling system **102** assigns the incoming call to a hold queue in a conventional way. Once assigned to a hold queue, the caller is likely to hear a message requesting patience followed by music on hold. Concurrently with, or after, assigning the incoming call to a hold queue, intelligent call handling system **102** may determine a method for sending additional information to the caller and send the information to the caller.

One method of sending additional information to a caller at telephone station apparatus **104** is via data network **114**. Upon selecting data network **114** for sending the additional information, intelligent call handling system **102** may query database **110** to determine a data network address associated with telephone station apparatus **104**. Database **110** may, for instance, comprise a table that associates a data network address with a calling line identification number (CLID). In this regard, it is noted that CLID information identifying telephone station apparatus **104** will typically be available to the intelligent call handling system over a connection through CCS network **124**. In FIG. **1**, terminal **112** is associated with telephone station apparatus **104**. When intelligent call handling system **102** has determined, by a query to database **110**, a data network address for terminal **112**, the system may send information over data network **114** to terminal **112**. At terminal **112** a client application may leave a dormant state and present the received information to the caller.

The information sent from intelligent call handling system **102** to terminal **112** may include a list of frequently asked questions and their answers. If an entry in the list satisfies the caller, the caller may then end the call, for instance by hanging up the receiver of telephone station apparatus **104**. Alternatively, the information may include the place the caller holds in the hold queue and/or an estimate of time required to wait until the call is completed. The caller may be presented with a menu of channels of music from which a selection may be made. Menu selections may include genres of music (classical/jazz/rock/country) or specific radio stations. The selection would then be reflected in the music on hold heard by the caller over the first communication link. Further, information may be presented regarding a currently playing musical track, such as the artist and song name.

As will be apparent to a person skilled in the art, database **110** can be accessible via a packetized data network and could be modelled on the Domain Name Service (DNS) service or the Lightweight Directory Access Protocol (LDAP).

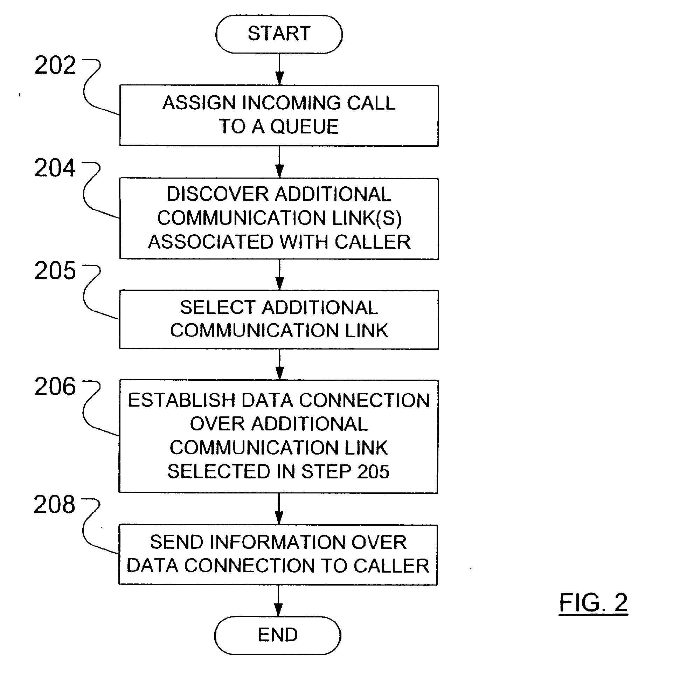

FIG. **2** illustrates the steps of a method of sending supplementary information to a caller. Initially, an incoming call is assigned to a queue (step **202**). The presence of any additional communication links to a data terminal associated with the caller is then discovered (step **204**). From among those additional links discovered in step **204** one is selected (step **205**). A parallel data connection is established (step **206**) over the additional link selected in step **205**. Information is then sent over the data connection to the terminal (step **208**).

One method of establishing a parallel data connection (step **206**) is disclosed in U.S. Patent Application No. 09/220860, the contents of which are incorporated herein by reference.

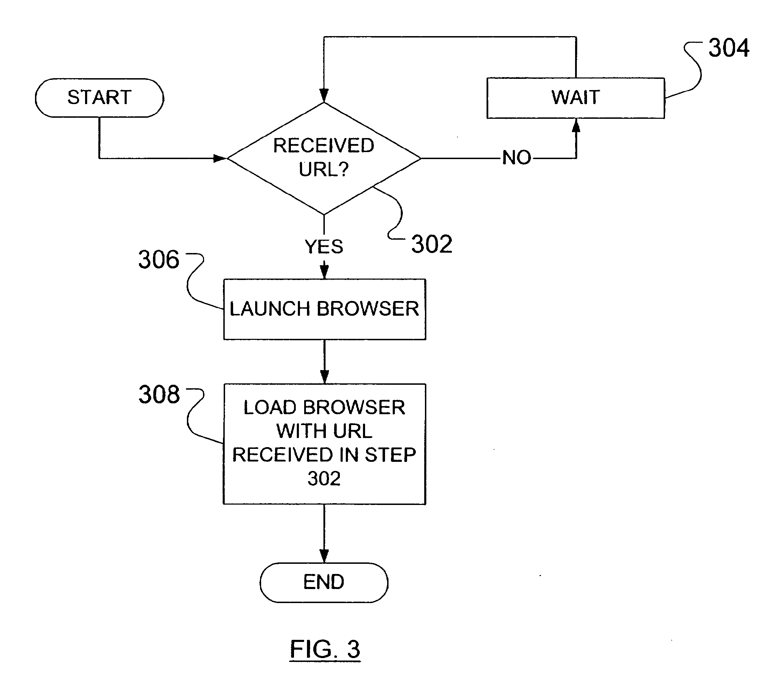

Steps followed by a client application running on a data terminal **112** associated with a caller at telephone station apparatus **104** are outlined in FIG. **3**. The application, once started, remains waiting (step **304**) in a dormant state until information, such as a uniform resource locator (URL: i.e., a web page address), is received (step **302**). The information may be received at a particular port of terminal **112** to which the client application 'listens'. A browser (user interface) application may then be launched (step **306**) and loaded with information from a source on the data network **114** at the received URL (step **308**). While on hold, the caller may browse the information available at the URL and receive other information herein described.

If a query to a database fails to return a data network address for the caller, the caller may be given the option to supply the address directly over the first communication link. The caller may, for instance, supply a data network address through the use the dual tone multifrequency (DTMF) system of the telephone keypad.

It may be the case that a data network address is assigned to the caller's data terminal dynamically, either when the terminal is powered on or when the terminal connects to the data network. However a connection is established, a 'start-up' program may be run which logs into a directory server (database **110**) and registers an IP address and associated CLID in the directory. Any entries in the directory server that have the same IP address would be deleted, with the assumption that these are out of date (e.g., a terminal previously having this IP address has been turned off and the IP address freed). Intelligent call handling system **102** would use LID information to look up the IP address from the directory server either directly or indirectly via a 'reflecting' web server to establish a data connection with the calling party.

A reflecting web server is envisioned as a web server that is accessible from the outside of a firewall (e.g. from the Internet) and has access to a network behind the firewall. The reflecting web server would run an application, say a common gateway interface (CGI) script, that forwards CLID information received from intelligent call handling system **102** to a directory server behind a firewall and may receive and pass back to intelligent call handling system **102** an IP address associated with the CLID information.

By way of example, consider a situation wherein a caller calls a call centre and an intelligent call handling system places the call in a hold queue. The intelligent call handling system queries a database with the CLID information of the call. Received from the database is an IP address such as '128.64.32.16' for the terminal associated with the caller. The intelligent call handling system then establishes a connection to this terminal and sends to the terminal an address of a server on the data network and a location on that server of a hypertext markup language (HTML) document such as:
http://www.company.com/holdinfo/4165935514.html.
The document has a name, such as the caller's telephone number, that uniquely associates it with the caller. This server, in the HTML document, dynamically maintains statistical information in respect of calls handled by the intelligent call handling system. An application running on the caller's terminal receives the address and, recognising the format, initializes a browser application, loading the browser with the address as it is initialized. The caller may then read the document at that address including information such as:
"You are sixth in line to reach an agent. Estimated waiting time is 11 minutes."
and a link to a page of frequently asked questions and their answers.

Rather than wake a dormant client application on terminal **112**, an E-mail message may be sent to the caller (and received at terminal **112**) that includes a URL of a page of information specific to the call. By visiting the URL with a browser, the caller may learn appropriate information or exercise control over the music being received over the first communication link.

The URL may present a survey through a graphical user interface (GUI) equivalent to an interactive voice response (IVR) scheme otherwise available over the telephone alone. The nature of information available through the GUI typically exceeds that available via IVR. Further, a caller may use the GUI without fear of losing his position in the calling queue. Data collected through the interaction of a caller with a GUI may be presented to a call agent along with the call in a manner consistent with existing computer telephony integration (CTI) implementations, and/or stored in caller database **126**. Using the GUI may introduce the caller to advertisements regarding new products. Such advertising may be presented concurrently with the delivery of requested information. Also, the GUI may be used to allow the caller to change the music on hold. For instance, a window may indicate the type of music currently being presented to the caller (say, classical) and offer a menu of choices of types of music (say, jazz/rock/country) to which the music may be changed.

As an alternative to data network **114**, the multimedia information may be sent directly over PSTN **106** or over common channel signalling network **124**, provided a properly equipped switch **116** is available to receive the information and forward it to either telephone station apparatus **104** or terminal **112** (via a connection shown in FIG. **1** as a dashed line). Telephone station apparatus **104** may have an integrated screen (such as the Vista 350™ from Nortel Networks Corporation of Montreal, Canada) allowing interaction with information displayed thereon and supplied by call handling system **102**. Interaction with the screen of a Vista 350™ telephone occurs via an Analog Display Services Interface (ADSI) however, a telephone which includes a screen and a browser application would similarly obviate the need for a separate terminal.

In alternative embodiments, data network **114** may be a local area network (LAN) or a wide area network (WAN).

In another embodiment, the first communication link is accomplished through a connection between switch **116** and data network **114** (shown in FIG. **1** as a dashed line) using, for instance, the Voice over Internet Protocol (VoIP). For VoIP calls, the IP address associated with the caller may be determined through the use of the IP address that is provided as part of the VoIP signaling information exchanged as part of the VoIP call setup. For example, the data can be sent to port 80 (the standard HTTP port) of the same IP address that the call originated from. This method of determining a data network address associated with the caller can be used in place of a query to a database, or after a query, to confirm the accuracy of the address received from the database.

As will be apparent to a person skilled in the art, the present invention may be of particular use when used in conjunction with a phone having an integrated screen for information display and whose capabilities include a browser application, such that a separate terminal would not be required.

Other modifications will be apparent to those skilled in the art and, therefore, the invention is defined in the claims.

## Claims

1. After an incoming call has been established on a first communication link and assigned to a hold queue, a method for sending information to a caller of said incoming call comprising:
selecting an additional communication link for sending information to said caller; and
sending said information to said caller using said additional communication link.

2. The method of claim 1 wherein said additional communication link is one of either a data network, a telephone network or a common channel signaling network.

3. The method of claim 1 wherein said additional communication link is through a data network and said selecting further comprises discovering an address on said data network associated with said caller.

4. The method of claim 3 wherein said discovering said address comprises querying a database for an address associated with said caller.

5. The method of claim 4 wherein said address is an Internet Protocol address of a terminal associated with said caller.

6. The method of claim 5 further comprising, while said caller is in said hold queue,
sending said caller an audio signal over said first communication link,
receiving control signals for said audio signal over said additional communication link, said receiving facilitated by said information comprising a uniform resource locator of a web page, said uniform resource locator uniquely associating said web page with said caller; and
controlling said audio signal based on said receiving.

7. The method of claim 4 wherein said address is an electronic mail address associated with said caller.

8. The method of claim 7 further comprising, while said caller is in said hold queue,
sending said caller an audio signal over said first communication link,
receiving control signals for said audio signal over said additional communication link, said receiving facilitated by said information comprising a uniform resource locator of a web page, said uniform resource locator uniquely associating said web page with said caller; and
controlling said audio signal based on said receiving.

9. The method of claim 1 further comprising presenting said caller with audio over said first communication link.

10. The method of claim 9 wherein said information relates to the nature of said audio presented over said first communication link.

11. The method of claim 1 wherein said information includes the position of said caller in said hold queue.

12. The method of claim 1 wherein said information includes an estimate of time remaining for said caller to wait.

13. The method of claim 1 wherein said first communication link is a public switched telephone network.

14. The method of claim 1 wherein said first communication link uses a voice over Internet protocol.

15. The method of claim 1 wherein said information facilitates presenting said caller with a survey and said method further comprises receiving said caller's answers to said survey.

16. The method of claim 15 further comprising presenting caller's answers to said survey to a call agent in conjunction with connecting said call to said call agent.

17. The method of claim 15 further comprising storing caller's answers to said survey in a caller database.

18. After an incoming call has been established on a first communication link, a method for sending information to a caller of said incoming call comprising:
assigning said incoming call to a hold queue;
selecting an additional communication link for sending information to said caller; and
sending said information to said caller using said additional communication link.

19. A call handling system comprising:
means for establishing a first communication link with a caller of an incoming call;
means for assigning said incoming call to a hold queue;
means for selecting an additional communication link for sending information to said caller; and
means for sending said information to said caller using said additional communication link.

20. A call handling system comprising a processor operable to:
establish a first communication link with a caller of an incoming call;
assign said incoming call to a hold queue;
select an additional communication link for sending information to said caller; and
send information to said caller using said additional communication link.

21. A computer readable medium for providing program control to a processor, said processor included in a call handling system, said computer readable medium adapting said call handling system to be operable to:
establish a first communication link with a caller of an incoming call;
assign said incoming call to a hold queue;
select an additional communication link for sending information to a caller of said incoming call; and
send said information to said caller using said additional communication link.

22. A method for presenting information to a caller comprising:
where said caller is connected to a call handling system over a first communication link, receiving information from said call handling system over an additional communication link, said additional communication link comprising a data communication link;
launching, responsive to receiving said information, a user interface; and
presenting said information to said caller through said user interface.

23. The method of claim 22 wherein said user interface is an Analog Display Services Interface.

24. An information presenting system comprising:
where said caller is connected to a call handling system over a first communication link, means for receiving information from said call handling system over an additional communication link, said additional communication link comprising a data communication link;
means for launching, responsive to receiving said information, a user interface; and
means for presenting said information to said caller through said user interface.

25. An information presenting system comprising a processor operable to:
where said caller is connected to a call handling system over a first communication link, receive information from said call handling system over an additional communication link, said additional communication link comprising a data communication link;
launch, responsive to receiving said information, a user interface; and
present said information to said caller through said user interface.

26. A computer readable medium for providing program control to a processor, said processor included in an information presenting system, said computer readable medium adapting said information presenting system to be operable to:
where said caller is connected to a call handling system over a first communication link, receive information from said call handling system over an additional communication link, said additional communication link comprising a data communication link;
launch, responsive to receiving said information, a user interface to present said information to said caller through said user interface.
